# EUROPÄISCHE PATENTSCHRIFT

(11) **EP 1 506 893 B1**
(45) Veröffentlichungstag und Bekanntmachung des Hinweises auf die Patenterteilung: **08.10.2008**
(21) Anmeldenummer: 04017436.9
(22) Anmeldetag: 23.07.2004
(51) Int. Cl.: B60Q 1/24, B60Q 1/08

(54) **Kraftfahrzeug mit Erfassung und Analyse der Objekten in dem Umfeld des Fahrzeugs**
Vehicle with detection and analyse of the objects around the vehicle
Véhicule avec détection et analyse des objets autour de la voiture

(30) Priorität: 09.08.2003 DE 10336681
(43) Veröffentlichungstag der Anmeldung: 16.02.2005
(73) Patentinhaber: AUDI AG, 85045 Ingolstadt (DE)
(72) Erfinder: Koser, Uwe, Dr., 85055 Ingolstadt (DE); Pfeffer, Frank, 85101 Ingolstadt (DE)
(74) Vertreter: Thielmann, Frank

(56) Entgegenhaltungen:
- DE-A1- 10 239 885
- US-B1- 6 281 806

## Beschreibung

Die Erfindung betrifft ein Kraftfahrzeug mit einer Einrichtung zur Umfelderfassung umfassend ein Erfassungsmittel und ein Mittel zur Analyse der vom Erfassungsmittel gegebenen Informationen zur Ermittlung eines im Umfeld befindlichen Objekts, und mit einer über eine Steuerungseinrichtung in Abhängigkeit des Ermittlungsergebnisses derart ansteuerbaren Leuchteinrichtung, dass das ermittelte Objekt individuell beleuchtbar ist, wobei das Mittel zur Analyse zur Ermittlung beliebiger unbeweglicher und beweglicher Objekte ausgebildet ist.

Ein solches Kraftfahrzeug ist beispielsweise aus DE 100 60 734 bekannt. Es weist eine Einrichtung zur Umfelderfassung mit einem Erfassungsmittel in Form einer Kamera sowie einem nachgeschalteten Bildanalysemittel in Form einer Bildverarbeitungseinrichtung auf. Diese ist in der Lage, im Kamerabild Verkehrszeichen, also Straßenbeschilderungselemente ermitteln zu können. Sie bestimmt die räumliche Lage derselben bezüglich des Fahrzeugs. Anhand der bekannten Positionsdaten beziehungsweise Lage relativ zum Fahrzeug wird nun eine Leuchteinrichtung, dort ein Scheinwerfer, angesteuert, der individuell das ermittelte Straßenbeschilderungselement beleuchtet und so dem Fahrer deutlich sichtbar macht.

Das bekannte System lässt wie beschrieben ausschließlich die Erfassung stehender Straßenbeschilderungselemente zu. Solche Straßenbeschilderungselemente zeichnen sich jedoch in der Regel von Haus aus durch eine mehr oder weniger stark reflektierende Oberfläche aus, so dass sie bei eingeschalteter Fahrzeugbeleuchtung allein durch das normale Scheinwerferlicht sehr deutlich zu erkennen sind. Einer zusätzlichen Beleuchtung dieser Objekte bedarf es nicht unbedingt, wenngleich dies aus Gründen der Verkehrssicherheit zweckmäßig ist. Eine weit größere Gefahr geht jedoch von Objekten aus, die sich bewegen, also beispielsweise Fußgänger, die am Straßenrand laufen, Tiere, die sich der Fahrbahn nähern oder dergleichen. Eine beachtliche Gefahrenquelle stellen auch Gegenstände dar, die auf der Fahrbahn liegen, z.B. größere Steine, herabgefallene Ladungsteile, von einem Kfz verlorene Ladung etc.

Aus der DE 102 39 885 A1 ist ein Steuersystem für die optische Achse von Fahrzeugscheinwerfern nach dem Oberbegriff des Anspruchs 1 bekannt, dass unter anderem eine Kamera zum Erfassen eines Objekts auf einer Straße vor dem Fahrzeug, eine CPU zum Beurteilen, ob das Objekt durch den Ausleuchtungsbereich von Fahrzeugscheinwerfern gemäß dieser Druckschrift abgedeckt wird oder nicht, und ein Stellglied zum Verändern der optischen Achse der Scheinwerfer enthält. Die Veränderung erfolgt so, dass der Ausleuchtungsbereich das Objekt abdecken kann, falls das Objekt als außerhalb des Ausleuchtungsbereichs befindlich beurteilt wird. Vorzugsweise wird die optische Achse nicht verändert, falls das Objekt als unbeweglich bestimmt wird.

Der Erfindung liegt das Problem zugrunde, ein Kraftfahrzeug anzugeben, das gegenüber dem aus dem beschriebenen Stand der Technik bekannten Kraftfahrzeug verbessert ist.

Zur Lösung dieses Problems ist es bei einem Kraftfahrzeug der eingangs genannten Art erfindungsgemäß vorgesehen, dass wenigstens eine weitere Einrichtung zur Umfelderfassung umfassend ein weiteres Erfassungsmittel vorgesehen ist, dessen Informationen von dem oder einem weiteren Analysemittel zur Verifizierung des über die erste Umfelderfassungseinrichtung bzw. das erste Erfassungsmittel ermittelten Objekts verarbeitet werden.

Beim erfindungsgemäßen Kraftfahrzeug ist die Objekterfassung nicht auf unbewegliche Objekte in Form ausschließlich der Straßenbeschilderungselemente begrenzt. Vielmehr ist das Analysemittel derart ausgebildet, dass ein beliebiges unbewegliches Objekt, also beispielsweise ein auf der Fahrbahn liegender Gegenstand, erfasst werden kann. In gleicher Weise können auch beliebige bewegliche Objekte wie Fußgänger, Tiere, Fahrradfahrer, die in der Regel relativ schlecht sichtbar sind etc. erkannt werden. Die Analysemittel bestimmen die Positions- oder Winkelkoordinaten des erfassten Objekts bezüglich des Fahrzeugs, auf deren Basis die Lichtsteuerung erfolgt. Über die Analysemittel werden sämtliche relevanten Positionsdaten erfasst, die zur genauen Ansteuerung der Leuchteinrichtung erforderlich sind. Liegen die Positions- oder Steuerungsdaten vor, wird die Leuchteinrichtung entsprechend angesteuert, um das erfasste Objekt individuell zu beleuchten. Als Leuchteinrichtung kann jede beliebige Beleuchtung, wie sie bei Kraftfahrzeugen bekannt ist, verwendet werden. Denkbar ist z.B. eine separate, verstellbare Lichtquelle in Form einer Glühlampe. Auch eine entsprechende Ansteuerung verschiedener einzelner LED's bei neuartigen LED-Scheinwerfern zur individuellen Beleuchtung ist denkbar. Weiterhin ist auch die Verwendung von ansteuerbaren Mikrospiegeln, über die Licht vom Kraftfahrzeug ausgestrahlt wird, denkbar, wobei in diesem Fall eine entsprechende Anzahl von Mikrospiegeln zur individuellen Beleuchtung angesteuert wird. Insgesamt lässt das erfindungsgemäße Kraftfahrzeug eine gegenüber dem Stand der Technik deutlich verbesserte individuelle Objektbeleuchtung, verbunden mit einer deutlich besseren Fahrerinformation und Fahrerwarnung zu.

Eine besonders vorteilhafte Erfindungsausgestaltung schlägt vor, wenigstens eine weitere Einrichtung zur Umfelderfassung umfassend ein weiteres Erfassungsmittel vorzusehen, dessen Informationen von dem oder einem weiteren Analysemittel zur Verifizierung des über die erste Umfelderfassungseinrichtung ermittelten Objekts verarbeitet werden. Gemäß dieser Erfindungsausgestaltung erfolgt die Objektbeleuchtung nicht nur auf Basis des einen Objektermittlungsergebnisses sondern auf Basis wenigstens zweier Ermittlungsergebnisse, wobei das zweite Ermittlungsergebnis der Verifizierung des ersten dient. Wird also innerhalb der vom ersten Erfassungsmittel aufgenommenen Daten oder Informationen ein Objekt ermittelt, so wird überprüft, ob sich dieses Objekt in den mit dem zweiten Erfassungseinrichtung aufgenommenen Daten wieder findet, um so Sicherheit zu haben, dass es sich tatsächlich um ein zu beleuchtendes Objekt handelt. Dies ist insbesondere deshalb wichtig, da aufgrund der Ermittlung beliebiger unbeweglicher und beweglicher Objekte die Zahl der als relevant zu beurteilenden Objekte eklatant zunimmt und infolgedessen es sehr zweckmäßig ist, sicherzustellen, dass es sich tatsächlich um ein zu beleuchtendes Objekt handelt, um eine unnötige beziehungsweise nicht gerechtfertigte Beleuchtung, die gegebenenfalls zur Verwirrung des Fahrers führen kann, zu vermeiden. Das oder die Analysemittel verfügen über entsprechende Analysealgorithmen um zum einen die Objektbestimmung vorzunehmen und die entsprechenden Positionsdaten zu ermitteln, zum anderen verfügen sie über geeignete Vergleichsoder Verifizierungsalgorithmen, die eine Übereinstimmungsprüfung beziehungsweise Verifizierung zulassen. Erst wenn die Verifizierung positiv abgeschlossen ist, besteht Sicherheit, dass es sich tatsächlich um ein zu beleuchtendes Objekt handelt, wonach die entsprechende Ansteuerung der Leuchteinrichtung erfolgt. Die Verifizierung kann z.B. kontinuierlich erfolgen, nachdem über beide Erfassungsmittel die Umfelderfassung kontinuierlich erfolgt, mithin also auch die Objektermittlung kontinuierlich vonstatten geht. Dies ist zum einen hinsichtlich einer Nachführung der Leuchteinrichtung die sich mit dem Fahrzeug bewegt, bezüglich des unbewegten oder bewegten Objekts und der damit verbundenen kontinuierlichen Positionsänderung zwischen Fahrzeug und Objekt erforderlich. Alternativ dazu besteht die Möglichkeit, nach einer erstmaligen Verifizierung keinen weiteren Verifizierungsschritt mehr vorzunehmen, sondern lediglich die Informationen des ersten Erfassungsmittels, das das Objekt nach wie vor zeigt beziehungsweise aufnimmt, zu verwenden. Auch eine intermittierende Verifizierung in bestimmten Zeitintervallen oder dergleichen ist denkbar.

Wenngleich die Möglichkeit besteht, ein Objekt nur dann als verifiziert anzusehen, wenn die jeweiligen Objekt- oder Positionsdateninformationen annähernd zu 100 % übereinstimmen, ist es zweckmäßig, wenn ein Analyseergebnis gegenüber dem oder den anderen Analyseergebnissen Priorität genießt und die individuelle Beleuchtung dann erfolgt, wenn das oder die anderen Analyseergebnisse in einem vorbestimmten Umfang mit dem vorrangigen Analyseergebnis übereinstimmen. Hiernach ist also keine 100 %ige Übereinstimmung zur Verifizierung erforderlich, es langt eine Übereinstimmung in einem hinreichenden Maß aus, wobei die Übereinstimmung zweckmäßigerweise weitestgehend sein sollte.

Eine vorteilhafte Weiterbildung des Erfindungsgedanken sieht vor, dass die Erfassungsmittel in unterschiedlichen Wellenlängenbereichen arbeiten. Das heißt, es werden Umfeldinformationen in unterschiedlichen Wellenlängenbereichen aufgenommen und ausgewertet, so dass qualitativ unterschiedliche Informationen vorliegen, die im Rahmen der Verifizierung bezüglich einander abgeglichen werden. Dabei kann wenigstens ein Erfassungsmittel eine im Wellenlängenbereich des sichtbaren Lichts arbeitende Kamera sein, alternativ oder zusätzlich kann wenigstens ein gegebenenfalls weiteres Erfassungsmittel außerhalb des Wellenlängenbereichs des sichtbaren Lichts arbeiten. Als ein derartiges Erfassungsmittel können beispielsweise ein oder mehrere Infrarotsensoren, die im Bereich des nahen oder fernen Infrarots arbeiten. Ein im nahen Infrarotbereich bis ca. 1100 nm arbeitender Sensor liefert ein Reflektionsbild des ausgesendeten IR-Lichts, in dem die Konturen der aufgenommenen Objekte gut sichtbar sind. Ein im fernen IR-Bereich >1500 nm arbeitender Sensor liefert Wärmebildinformationen, die ausgewertet werden können. Alternativ können auch ein oder mehrere Radarsensoren vorgesehen sein. Alternativ ist auch die Verwendung eines oder mehrerer Laserscanner, die in der Regel im Bereich des sichtbaren Lichts arbeiten und der Umfeldabtastung dienen, denkbar. Schließlich sind auch so genannte PMD-Einrichtungen verwendbar (PMD = Photonic Mixer Device). Eine PMD-Einrichtung umfasst einen im nahen IR-Bereich arbeitenden Sensor, der Abstands- und Bildinformationen liefert.

Wie beschrieben werden im Rahmen der Verifizierung zwei separate Umfelderfassungssysteme umfassend jeweils ein Erfassungsmittel verwendet, die zweckmäßigerweise in unterschiedlichen Wellenlängenbereichen arbeiten. Es ist beispielsweise denkbar, eine übliche Kamera in Verbindung mit einem Radarsensor einzusetzen. Auch kann z.B. ein Infrarot-Erfassungsmittel, das im nahen Infrarotbereich arbeitet, in Verbindung mit einem Laserscanner verwendet werden. Hier sind beliebige Kombinationen im Rahmen der Sensorfusion, bei der also die Erfassungsergebnisse verschiedener Sensoren (gemeint sind hierunter Erfassungsmittel) verknüpft werden, denkbar.

Um die Positionsdaten bestimmen zu können, besteht die Möglichkeit, diese beispielsweise bei Verwendung nur einer Kamera rein rechnerisch zu bestimmen, wobei dies jedoch relativ komplexe Rechenvorgänge voraussetzt. Werden beispielsweise Kameras verwendet, seien es Kameras im sichtbaren Licht oder Kameras, die im nahen oder fernen Infrarotbereich arbeiten, so ist es zweckmäßig, wenn zur Ermittlung von Positionsdaten eines Objekts bezüglich des Fahrzeugs zwei derartige Erfassungsmittel, die Bilddaten liefern, zur Realisierung eines Stereoeffekts versetzt zueinander angeordnet sind, wobei das oder die Analysemittel zur Ermittlung der Positionsdaten aus den beiden Bilddaten ausgebildet sind. Die Kameras, die um ein geringes Stück und einen geringen Winkel bezüglich einander versetzt sind, ermöglichen so die Aufnahme von Stereobildern, also von gegeneinander versetzten Bildern, anhand welcher in bekannter Weise Positionsdaten bezüglich eines Objekts ermittelt werden können. Alternativ zur Verwendung zweier Kameras besteht wie beschrieben die Möglichkeit, eine Kamera und beispielsweise einen Radarsensor zu verwenden. In einem solchen Fall liefert der Radarsensor - entsprechendes gilt auch für einen Laserscanner - genaue Positionsdaten und Winkelkoordinaten, aus denen sich die Objektpositionsdaten bestimmen lassen. Darüber hinaus kann hierüber auch die Geschwindigkeit beziehungsweise die Relativ-Geschwindigkeit des Objekts ermittelt werden, nachdem die Eigengeschwindigkeit des Fahrzeugs bekannt ist. Dies ist natürlich auch bei Verwendung von Stereokameras oder einer PMD-Einrichtung möglich.

Die Vorteile des erfindungsgemäßen Kraftfahrzeugs ergeben sich insbesondere dann, wenn aufgrund der Umgebungshelligkeit eine optische Hervorhebung eines ermittelten Objekts durch die individuelle Beleuchtung möglich ist, wenn es also hinreichend dunkel ist. Die unterschiedlichen Erfassungsmittel haben jeweils besondere Eigenschaften, die sich in den gelieferten Daten niederschlagen. Eine im sichtbaren Bereich arbeitende Kamera liefert optisch sehr gut aufgelöste Bildinformationen, in denen die Konturen der Objekte sehr gut sichtbar sind. Ähnliches gilt auch für Kameras oder Sensorsysteme im nahen oder fernen Infrarotbereich, die jedoch lediglich Grauwertbilder, in denen gleichermaßen die Objektkonturen zu erkennen sind, liefern. Nachdem der Arbeitsbereich einer üblichen Kamera im optischen Wellenlängenbereich liegt, können somit Objektinformationen in Bereichen, die im Dunkeln liegen, nicht aufgenommen werden. Bei einer Nachtfahrt bedeutet dies, dass die von einer üblichen Kamera gelieferten Bildinformationen mit der Reichweite des Lichtkegels der Kfz-Beleuchtung korrelieren. Hier zeigt sich nun der Vorteil der im nahen oder fernen Infrarotbereich arbeitenden Erfassungsmittel, die auch noch Informationen aus außerhalb des Lichtkegels liegenden Bereichen liefern. Bei hinreichender Umgebungshelligkeit jedoch sind die Bildinformationen, die eine übliche Kamera liefert, sehr wertvoll und umfangreich, weshalb zweckmäßigerweise in diesen Fällen eine solche Kamera eingesetzt wird. Um einen optimalen Aufnahmebetrieb zu ermöglichen sieht nun eine zweckmäßige Erfindungsausgestaltung vor, dass ein im sichtbaren Wellenlängenbereich arbeitendes Erfassungsmittel und zwei außerhalb dieses Bereichs arbeitende Erfassungsmittel vorgesehen sind, von denen eines die Bestimmung der Positionsdaten des Objekts bezüglich des Fahrzeugs zulassende Informationen liefert, wobei in Abhängigkeit der Umgebungshelligkeit von einem gemeinsamen Betrieb des im sichtbaren Bereich arbeitenden Erfassungsmittels und des die Positionsdaten liefernden Erfassungsmittels auf einen gemeinsamen Betrieb des weiteren im nicht-sichtbaren Bereich arbeitenden Erfassungsmittels zusammen mit dem die Positionsdaten liefernden Erfassungsmittel schaltbar ist.

Beispielsweise ist eine übliche Kamera und ein im nahen Infrarotbereich arbeitendes Erfassungsmittel sowie ein Radarsensor vorgesehen. Ist es noch hinreichend hell, z.B. in der Dämmerung, werden die von der Kamera aufgenommenen Informationen zusammen mit den von dem Radarsystem gelieferten Informationen verarbeitet. Nimmt nun die Helligkeit immer mehr ab, so dass der Erfassungsbereich der Kamera immer kleiner wird, wird auf einen Betrieb des im nahen Infrarotbereich arbeitenden Erfassungsmittels zusammen mit dem Radarsystem umgeschalten, nachdem das im nahen Infrarotbereich arbeitende Erfassungsmittel "weiter sehen" kann, also einen wesentlich weiteren Umfeldbereich abtasten kann. Natürlich sind beliebige andere Kombinationen denkbar, z.B. eine optische im sichtbaren Bereich arbeitende Kamera, ein im fernen Infrarotbereich arbeitendes zweites Erfassungsmittel sowie ein Laserscanner.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipskizze zur Darstellung der Erfassung und individuellen Beleuchtung eines unbewegten Objekts,
- Fig. 2: eine Prinzipskizze zur Darstellung der Erfassung und individuellen Beleuchtung eines sich bewegenden Objekts,
- Fig. 3: eine Prinzipdarstellung eines Systems mit zwei Umfelderfassungseinrichtungen,
- Fig. 4: eine Prinzipdarstellung eines Systems mit drei Umfelderfassungseinrichtungen, und
- Fig. 5: eine Prinzipdarstellung eines Systems mit drei Umfelderfassungseinrichtungen und zwei separat ansteuerbaren Beleuchtungseinrichtungen.

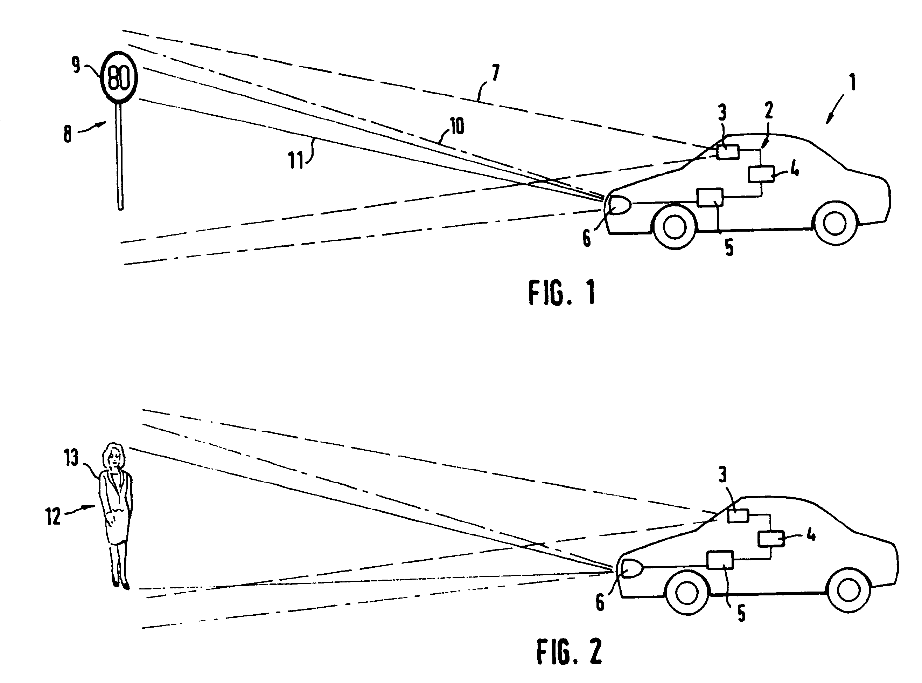

Fig. 1 zeigt ein erfindungsgemäßes Kraftfahrzeug 1 mit einer Umfelderfassungseinrichtung 2 bestehend aus einem Erfassungsmittel 3 und einem zugeordneten Analysemittel 4. Dieses kommuniziert mit einer Steuerungseinrichtung 5, die wiederum eine Leuchteinrichtung 6, hier einen Scheinwerfer mit seinen einzelnen Leuchtmitteln, steuert.

Bei dem Erfassungsmittel 3 kann es sich um ein beliebiges Erfassungsmittel handeln, das die Erfassung stehender oder sich bewegender Objekte im Fahrzeugvorfeld ermöglicht. Gezeigt ist der Erfassungsbereich 7 des Erfassungsmittels 3. Dieses kann beispielsweise eine im sichtbaren Wellenlängenbereich arbeitende Kamera sein, alternativ kann es sich um eine im nahen oder fernen Infrarot arbeitende Kamera oder Sensoreinrichtung handeln.

Mit dem Erfassungsmittel wird kontinuierlich das Fahrzeugvorfeld aufgenommen. Die erfassten Informationen, im Falle der beschriebenen Kameras die Bilddaten, werden dem Analysemittel 4 gegeben, das in der Lage ist, die Bildinformation zur Ermittlung stehender oder sich bewegender Objekte entsprechend zu analysieren. Hierzu sind geeignete Analysealgorithmen vorgesehen, z.B. im Falle einer im sichtbaren Bereich arbeitenden Kamera entsprechende Kanten- oder Konturdetektionsalgorithmen, im Falle von im Infrarotbereich arbeitenden Kameras z.B. Algorithmen, die die Temperatur der erfassten Objekte anhand vordefinierter Charakteristika ermitteln etc. Generell muss das Analysemittel 4 in der Lage sein, relevante, für den Fahrer interessierende Objekte im Bild beziehungsweise in der aufgenommenen Information zu ermitteln. Wird nun ein Objekt ermittelt, so werden gleichzeitig zu dem Objekt relevante Positionsdaten des Objekts relativ zum Fahrzeug 1 bestimmt. Auch dies erfolgt zweckmäßigerweise mit dem Analysemittel 4.

Liegen die Positionsdaten, also z.B. der Abstand zum Kraftfahrzeug 1 sowie die entsprechenden Winkelkoordinaten des Objekts bezüglich des Kraftfahrzeugs 1 vor, und handelt es sich um ein interessierendes Objekt, das anhand der vorgegebenen Charakteristika im Analysemittel 4 bestimmt wurde, so werden die relevanten Positionsdaten an das Steuerungseinrichtung 5 gegeben, die ihrerseits auf Basis dieser Positionsdaten die Leuchteinrichtung 6 entsprechend ansteuert. Die Leuchteinrichtung 6 kann beliebiger Natur sein. Beispielsweise kann es sich um einen üblichen Scheinwerfer mit mehreren Leuchtmitteln handeln, wobei ein Leuchtmittel beweglich ist, so dass es in einem gewissen Maß verstellt werden kann. Auch kann sich beispielsweise bei der Beleuchtungseinrichtung um einen LED-Scheinwerfer handeln, der eine hinreichend große LED-Matrix umfasst, wobei die LED separat angesteuert werden können. Es ist nun möglich, über die Steuerungseinrichtung 5 mehrere LED's entsprechend anzusteuern und gegebenenfalls auch lagemäßig zu verstellen, damit individuell auf das erfasste Objekt geleuchtet werden kann. Auch ist es denkbar, einem beispielsweise speziell für die individuelle Beleuchtung vorgesehenen Leuchtmittel, dem wenigstens ein Mikrospiegelarray zugeordnet ist, zu verwenden, wobei in diesem Fall die Mikrospiegel (auf einem Chip sind mehrere 100.000 separat ansteuerbare Mikrospiegel) über die Steuerungseinrichtung 5 angesteuert werden können und so das vom Leuchtmittel gegebene Licht entsprechend ausreflektiert wird.

In jedem Fall wird nun die Leuchteinrichtung 6 entsprechend angesteuert, so dass das erfasste Objekt individuell beleuchtet wird, mithin also - sollten die beiden Scheinwerfer des Kraftfahrzeugs ohnehin an sein - deutlicher angestrahlt wird und sich dem Fahrer deutlich auffällig präsentiert.

Fig. 1 zeigt die Erfassung eines sich unbewegenden Objekts 8 in Form eines Verkehrsschilds 9. Gezeigt ist zum einen der Erfassungsbereich 7 des Erfassungsmittels 3, sowie der Beleuchtungsbereich 10 der Beleuchtungseinrichtung 6, hier also des Scheinwerfers. Gezeigt ist ferner der direkt auf das Verkehrsschild 9 gerichtete Beleuchtungsbereich 11 der Beleuchtungseinrichtung 6, der durch entsprechende Ansteuerung derselben erzeugt wird.

Anstelle der Verwendung eines ohnehin integrierten Scheinwerfers beziehungsweise eines seiner Leuchtmittel etc. ist es auch denkbar, einen separaten Zusatzscheinwerfer zu verwenden, der z.B. im Bereich des rechten Außenspiegels oder im Bereich des Kühlergrills oder der Frontschürze oder dergleichen angeordnet ist.

Nachdem die Vorfelderfassung kontinuierlich erfolgt, erfolgt auch kontinuierlich die Objektermittlung wie auch die kontinuierliche Positionsdatenerfassung, so dass während der Fahrt des Kraftfahrzeugs, während welcher sich ständig sich die Position des Verkehrszeichens 9 bezüglich des Kraftfahrzeugs 1 ändert, stets die relative Lage zueinander bekannt ist und folglich eine exakte Nachführung der individuellen Beleuchtung des Verkehrsschilds 9 möglich ist.

Fig. 2 zeigt eine der Fig. 1 entsprechende Ausführungsform, wobei hier jedoch anstelle eines unbewegten Objekts ein sich bewegendes Objekt 12 in Form einer Person 13 erfasst wird. Das heißt, die Analysemittel 4 sind entsprechend ausgebildet beziehungsweise verfügen über entsprechende Analysealgorithmen für die gegebenen Bildinformationen des jeweiligen Erfassungsmittel 3, die eine Erfassung auch eines solchen sich bewegenden Objekts zulassen. Sofern die Analysemittel ein sich bewegendes Objekt anhand der vordefinierten Charakteristika erfassen, wird es auch hier virtuell markiert und kann kontinuierlich verfolgt werden. Nach Bestimmung der relevanten Positionsdaten wird auch hier die Beleuchtungseinrichtung 6 über die Steuerungseinrichtung 5 entsprechend angesteuert, um die Person 13 anzuleuchten und so dem Fahrer optisch zu kennzeichnen.

Wie bezüglich der Figuren 1 und 2 beschrieben, kann es sich bei dem Erfassungsmittel 3 z.B. um eine übliche im sichtbaren Bereich arbeitende Kamera oder eine Infrarotkamera handeln. Mit diesem ist die Bestimmung der relativen Position des erfassten Objekts bezüglich des Fahrzeugs unmittelbar möglich, gleichwohl kann sie aber rechnerisch erfasst werden.

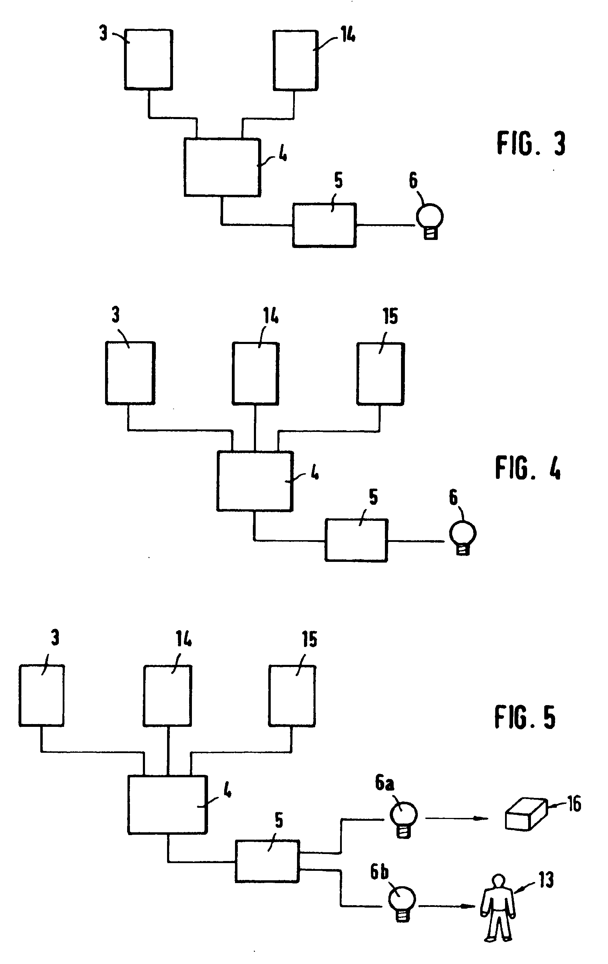

Um die Positionsdatenbestimmung weiter zu vereinfachen, und um ein Höchstmaß an Sicherheit dahingehend, dass tatsächlich ein relevantes Objekt erfasst wurde, zu geben, ist, wie in Fig. 3 gezeigt, neben dem Erfassungsmittel 3, also z.B. einer Infrarotkamera, ein weiteres Erfassungsmittel 14 vorgesehen, bei dem es sich z.B. um einen Radarsensor oder ein Radarsensorarray oder einen Laserscannerarray handeln kann. Während das Erfassungsmittel 3 ein Konturenbild des Vorfelds liefert, liefert das Erfassungsmittel 4, z.B. in Form des Radars, Informationen bezüglich der Position und des Winkels wie auch gegebenenfalls der Geschwindigkeit des Objekts, wobei diese dann auch rechnerisch im Analysemittel auf Basis der Eigengeschwindigkeit des Kraftfahrzeugs ermittelt werden kann. In jedem Fall liegen über das zweite Erfassungsmittel 14 mehr oder weniger unmittelbar entsprechende Positionsdaten vor.

Nachdem das Erfassungsmittel 14 ebenfalls eine Vorfelderfassung durchführt, kann über das Erfassungsergebnis des Erfassungsmittels 14 eine ein Höchstmaß an Sicherheit bietende Verifizierung des Erfassungsergebnisses des Erfassungsmittels 3 erfolgen. Denn sowohl im Datensatz des Erfassungsmittels 3 als auch im Datensatz des Erfassungsmittels 14 muss, sollte tatsächlich ein Objekt vorhanden sein, eine entsprechende Objektinformation vorhanden sein, wobei beide Objektinformationen miteinander korreliert werden können, mithin also gegeneinander verifiziert werden können. In der Regel genießt das Erfassungsergebnis des Erfassungsmittels 3 Priorität, die Daten des Erfassungsmittels 14 dienen der Verifizierung, wobei diese beispielsweise bereits dann gegeben ist, wenn die aus den Daten des Erfassungsmittels 3 bestimmten Objektinformationen zu einem hinreichenden Grad mit entsprechenden Objektinformationen, die das Erfassungsmittel 14 liefert, korrelieren. Weiterhin dient das Erfassungsmittel 14 zur entsprechenden Positionsdatenbestimmung.

Die jeweilige Objektbestimmung beziehungsweise Datenbestimmung beziehungsweise Auswertung der gelieferten Informationen erfolgt im Analysemittel 4, das hier beide gelieferten Informationen verarbeitet. Selbstverständlich ist es auch denkbar, jedem Erfassungsmittel ein separates Analysemittel zur Verfügung zu stellen und nachgeschaltet die Informationen zusammenzuführen. Das Analysemittel 4 nimmt auch die Verifizierung vor. Sofern am Ende des Verifizierungsalgorithmus die Korrelation der objektbezogenen Daten steht, ist davon auszugehen, dass an der erfassten Stelle tatsächlich ein Objekt vorhanden ist, das gemäß den vorgegebenen Charakteristika für den Fahrer relevant ist und entsprechend anzuleuchten ist. Die ermittelten Positionsdaten werden dann an die Steuerungseinrichtung 5 gegeben.

Fig. 4 zeigt eine weitere erfindungsgemäße Ausführungsform. Hier kommen drei separate Umfelderfassungseinrichtungen zum Einsatz. Zum einen ist ein erstes Erfassungsmittel 3, beispielsweise in Form einer im sichtbaren Bereich arbeitenden Kamera vorgesehen. Weiter ist ein zweites Erfassungsmittel 14 z.B. in Form des bereits beschriebenen Radarsystems vorgesehen. Schließlich ist ein drittes Erfassungsmittel 15 z.B. in Form einer im nahen Infrarotbereich arbeitenden Kamera, die die Kontur der Objekte im Vorfeld erfasst, vorgesehen. Allen ist wiederum ein gemeinsames Analysemittel 4 zugeordnet.

Der Umfeld- oder Vorfeldbereich, der über das als im sichtbaren arbeitende Kamera ausgebildete Erfassungsmittel 3 erfasst werden kann, hängt von der gegebenen Umgebungshelligkeit ab. Wenn es zu dunkel ist und eine Ausleuchtung der Umgebung lediglich über die Kraftfahrzeugscheinwerfer erfolgt, bestimmen diese den Bereich, der über das Erfassungsmittel 3 dargestellt werden kann. Dieser Bereich ist insbesondere bei Nachtfahrten zu gering, um frühzeitig ein Objekt kennen und den Fahrer darauf aufmerksam machen zu können.

Zu diesem Zweck ist das dritte Erfassungsmittel 15 in Form der Infrarotkamera vorgesehen. Bei hinreichender Umgebungshelligkeit, beispielsweise bei einsetzender Dämmerung und/oder aktiver IR-Beleuchtung, liefert das Erfassungsmittel 3 noch hinreichende Bildinformationen. Die im jeweiligen Bild aufgenommenen Objekte sind scharf dargestellt und können ohne weiteres und sehr exakt über das Analysemittel 4 analysiert werden. Das zweite Erfassungsmittel 14 in Form des Radars liefert die entsprechenden Verifizierungs- und Positionsbestimmungsinformationen. Ab Unterschreitung eines gewissen Helligkeitsgrades, was über einen nicht näher gezeigten Helligkeitssensor erfasst werden kann, wird nun, z.B. über das Analysemittel 4, von einem gemeinsamen Betrieb der Erfassungsmittel 3 und 14 auf einen gemeinsamen Betrieb der Erfassungsmittel 15 und 14 umgeschalten. Das Erfassungsmittel 15, das im Infrarotbereich arbeitet, kann ohne weiteres auch Objekte erfassen, die im nicht durch herkömmliche Halogen- oder Xenon-Scheinwerfer ausgeleuchteten Bereich, also im Dunkeln sind, so dass also wesentlich weiter "geblickt" werden kann. Das Analysemittel, umfassend einen geeigneten Prozessor oder dergleichen, verarbeitet von nun an die Informationen der beiden Erfassungsmittel 14 und 15 zur Ermittlung etwaiger relevanter Objekte und zur Verifizierung und Datenbestimmung der selben. Entsprechend erfolgt auch hier die Ansteuerung der Leuchteinrichtung 6 über eine Steuerungseinrichtung 5, wenn die Relevanzkriterien für ein auszuleuchtendes Objekt (z.B. Erfassung und Peilung eines Objekts relativ zum Fahrzeug bleibt unverändert, es befindet sich in einer Kollisionsposition, wenn die Fahrt fortgesetzt wird und sich das Objekt nicht entfernt, eine Kollision ist wahrscheinlich) erfüllt sind.

Schließlich zeigt Fig. 5 eine Ausführungsform, die im Wesentlichen der gemäß Fig. 4 entspricht, das heißt, es sind auch hier separate Erfassungsmittel 3, 14, 15 vorgesehen, wobei diese aber unterschiedlich zu den bezüglich Fig. 4 beschriebenen sein können. Beispielsweise kann anstelle eines Radars als zweites Erfassungsmittel 15 ein Laserscanner und anstelle des im nahen Infrarot arbeitenden dritten Erfassungsmittels ein im fernen Infrarot arbeitendes Erfassungsmittel eingesetzt werden. Bei der Ausführungsform gemäß Fig. 5 ist die Steuerungseinrichtung 5 in der Lage, zwei Leuchteinrichtungen 6a, 6b separat anzusteuern. Beispielsweise handelt es sich bei diesen um die beiden frontseitigen, als LED-Scheinwerfer ausgebildeten Kfz-Leuchten. Befinden sich nun im Vorfeld beispielsweise zwei relevante Objekte, im gezeigten Beispiel ein auf der Straße liegendes Hindernis 16 und eine Person 13, so besteht die Möglichkeit, beide Leuchtmittel 6a, 6b separat anzusteuern, so dass über die Leuchteinrichtung 6a das Hindernis16 (z.B. einen herabgefallenen Karton oder dergleichen) individuell ausgeleuchtet wird, während über die Leuchteinrichtung 6b die Person 13, die sich beispielsweise auf der anderen Straßenseite befindet oder die in deutlich unterschiedlicher Entfernung zum Fahrzeug steht, beleuchtet werden kann. Es ist also möglich, zwei Objekte separat zu erfassen, auf ihre Relevanz zu prüfen, zu Verifizieren und im Endeffekt individuell anzuleuchten.

## Patentansprüche

1. Kraftfahrzeug mit einer Einrichtung zur Umfelderfassung umfassend ein Erfassungsmittel und ein Mittel zur Analyse der vom Erfassungsmittel gegebenen Informationen zur Ermittlung eines im Umfeld befindlichen Objekts, und mit einer über eine Steuerungseinrichtung in Abhängigkeit des Ermittlungsergebnisses derart ansteuerbaren Leuchteinrichtung, dass das ermittelte Objekt individuell beleuchtbar ist, wobei das Mittel zur Analyse zur Ermittlung beliebiger unbeweglicher und beweglicher Objekte ausgebildet ist,
**dadurch gekennzeichnet,**
**dass** wenigstens eine weitere Einrichtung zur Umfelderfassung umfassend ein weiteres Erfassungsmittel (3, 14, 15) vorgesehen ist, dessen Informationen von dem oder einem weiteren Analysemittel (4) zur Verifizierung des über die erste Umfelderfassungseinrichtung bzw. das erste Erfassungsmittel ermittelten Objekts verarbeitet werden.

2. Kraftfahrzeug nach Anspruch 1,
**dadurch gekennzeichnet,**
**dass** ein Analyseergebnis gegenüber dem oder den anderen Priorität genießt und die individuelle Beleuchtung dann erfolgt, wenn das oder die anderen Analyseergebnisse in einem vorbestimmten Umfang mit dem vorrangigen Analyseergebnis übereinstimmen.

3. Kraftfahrzeug nach Anspruch 2,
**dadurch gekennzeichnet,**
**dass** die individuelle Beleuchtung dann erfolgt, wenn die zu vergleichenden Analyseergebnisse weitestgehend übereinstimmen.

4. Kraftfahrzeug nach einem der Ansprüche 1 bis 3,
**dadurch gekennzeichnet,**
**dass** die Erfassungsmittel (3, 14, 15) in unterschiedlichen Wellenlängenbereichen arbeiten.

5. Kraftfahrzeug nach einem der Ansprüche 1 bis 4,
**dadurch gekennzeichnet,**
**dass** wenigstens ein Erfassungsmittel (3, 14, 15) eine im Wellenlängenbereich des sichtbaren Lichts arbeitende Kamera ist

6. Kraftfahrzeug nach einem der Ansprüche 1 bis 5,
**dadurch gekennzeichnet,**
**dass** wenigstens ein gegebenenfalls weiteres Erfassungsmittel (3, 14, 15) außerhalb des Wellenlängenbereichs des sichtbaren Lichts arbeitet.

7. Kraftfahrzeug nach Anspruch 6,
**dadurch gekennzeichnet,**
**dass** als außerhalb des Wellenlängenbereichs des sichtbaren Lichts arbeitendes Erfassungsmittel (3, 14, 15) ein oder mehrere Infrarotsensoren, die im Bereich des nahen oder fernen Infrarots arbeiten, oder ein oder mehrere Radarsensoren, oder eine oder mehrere PMD-Einrichtungen vorgesehen sind.

8. Kraftfahrzeug nach einem der Ansprüche 4 bis 7,
**dadurch gekennzeichnet,**
**dass** ein gegebenenfalls weiteres Erfassungsmittel (3, 14, 15) ein oder mehrere Laserscanner ist.

9. Kraftfahrzeug nach einem der Ansprüche 1 bis 8,
**dadurch gekennzeichnet,**
**dass** zur Ermittlung von Positionsdaten eines Objekts bezüglich des Fahrzeugs zwei Erfassungsmittel (3, 14, 15), die Bilddaten liefern, zur Realisierung eines Stereoeffekts versetzt zueinander angeordnet sind, und das oder die Analysemittel zur Ermittlung der Positionsdaten aus den beiden Bilddaten ausgebildet ist.

10. Kraftfahrzeug nach einem der Ansprüche 1 bis 9,
**dadurch gekennzeichnet,**
**dass** wenigstens eines der kraftfahrzeugseitig vorgesehenen Erfassungsmittel (3, 14, 15) Informationen liefert, anhand welcher die Position eines Objekts bezüglich des Fahrzeugs angebende Daten bestimmbar sind.

11. Kraftfahrzeug nach einem der Ansprüche 4 bis 10,
**dadurch gekennzeichnet,**
**dass** ein im sichtbaren Wellenlängenbereich arbeitendes Erfassungsmittel (3) und zwei außerhalb dieses Bereichs arbeitende Erfassungsmittel (14, 15), von denen eines (14) die Bestimmung von Positionsdaten des Objekts bezüglich des Fahrzeugs zulassende Informationen liefert, vorgesehen sind, und dass in Abhängigkeit der Umgebungshelligkeit von einem gemeinsamen Betrieb des im sichtbaren Bereich arbeitenden Erfassungsmittels (3) und des die Positionsdaten liefernden Erfassungsmittel (14) auf einen gemeinsamen Betrieb des weiteren im nicht-sichtbaren Bereich arbeitenden Erfassungsmittels (15) zusammen mit dem die Positionsdaten liefernden Erfassungsmittel (14) schaltbar ist.

## Claims

1. A motor vehicle having a device for detecting the surrounding area, comprising a means of detection and a means of analysing the information output by the detection means in order to determine an object situated within the surrounding area, and having an illuminating device that can be activated in such a way via a control device, in dependence on the result of the determination, that the object determined can be individually illuminated, the analysis means being designed so as to determine any desired number of stationary and moving objects,
**characterised in that**
there is provided at least one further device for detection of the area around the vehicle, comprising a further means of detection (3, 14, 15), the information from which is processed by the, or some other, analysis means (4) in order to verify the object determined via the first device for detecting the surrounding area or the first means of determination.

2. The motor vehicle as claimed in claim 1, **characterised in that** one analysis result enjoys priority over one or more other results and the individual illumination takes place once that result or the other analysis results are in agreement with the higher-order analysis result in a prespecified scope.

3. The motor vehicle as claimed in claim 2, **characterised in that** the individual illumination takes place once the analysis results for comparison are in agreement to the greatest possible extent.

4. The motor vehicle according to any one of claims 1 to 3, **characterised in that** the means of detection (3, 14, 15) operate within different wavebands.

5. The motor vehicle according to any one of claims 1 to 4, **characterised in that** at least one means of detection (3, 14, 15) is a camera operating in the waveband of visible light.

6. The motor vehicle according to any one of claims 1 to 5, **characterised in that** at least one further detection means (3, 14, 15), if applicable, operates outside of the waveband of visible light.

7. The motor vehicle according to claim 6, **characterised in that** one or more infrared sensors which operate in the near or far infrared range, or one or more radar sensors, or one or more PMD devices, are provided as the detection means (3, 14, 15) operating outside of the waveband of visible light.

8. The motor vehicle according to any one of claims 4 to 7, **characterised in that** an optional further detection means (3, 14, 15) is one or more laser scanners.

9. The motor vehicle according to any one of claims 1 to 8, **characterised in that** in order to determine positional data on an object in relation to the vehicle, two detection means (3, 14, 15) which supply picture data are arranged offset with respect to one another so as to bring about a stereo effect, and the means of analysis is/are configured so as to determine the positional data made up of the two sets of picture data.

10. The motor vehicle according to any one of claims 1 to 9, **characterised in that** at least one of the detection means (3, 14, 15) provided on the vehicle supplies information with the aid of which data giving the position of an object in relation to the vehicle can be ascertained.

11. The motor vehicle according to any one of claims 4 to 10, **characterised by** the provision of one detection means (3) operating within the visible wave band, and two detection means (14, 15) which operate outside of said band and one of which (14) supplies information that allows positional data to be ascertained about the object in relation to the vehicle, and that in dependence on the brightness of the surrounding area it is possible to switch over, from joint operation of the detection means (3) operating in the visible band and of the detection means (14) supplying the positional data, to joint operation of the additional detection means (15) operating in the non-visible band together with the detection means (14) supplying the positional data.

## Revendications

1. Véhicule automobile avec un dispositif de détection de l'environnement comprenant un moyen de détection et un moyen pour analyser les informations données par le moyen de détection afin de déterminer un objet se trouvant dans l'environnement, et avec un dispositif d'éclairage pouvant être commandé par un dispositif de commande en fonction du résultat de détermination de telle sorte que l'objet déterminé puisse être éclairé individuellement, le moyen d'analyse étant réalisé pour déterminer des objets quelconques immobiles et mobiles, **caractérisé en ce qu'**au moins un autre dispositif est prévu pour détecter l'environnement comprenant un autre moyen de détection (3, 14, 15), dont les informations sont traitées par le moyen -d'analyse (4) ou un autre pour vérifier l'objet déterminé par le premier dispositif de détection de l'environnement ou le premier moyen de détection.

2. Véhicule automobile selon la revendication 1, **caractérisé en ce qu'**un résultat d'analyse est prioritaire par rapport à l'un ou aux autres et l'éclairage individuel est effectué ensuite lorsque le ou les autres résultats d'analyse concordent dans une mesure prédéterminée avec le résultat d'analyse prioritaire.

3. Véhicule automobile selon la revendication 2, **caractérisé en ce que** l'éclairage individuel est ensuite effectué lorsque les résultats d'analyse à comparer concordent dans une très large mesure.

4. Véhicule automobile selon l'une quelconque des revendications 1 à 3, **caractérisé en ce que** les moyens de détection (3, 14, 15) travaillent dans différentes plages d'ondes.

5. Véhicule automobile selon l'une quelconque des revendications 1 à 4, **caractérisé en ce qu'**au moins un moyen de détection (3, 14, 15) est une caméra travaillant dans la plage d'ondes de la lumière visible.

6. Véhicule automobile selon l'une quelconque des revendications 1 à 5, **caractérisé en ce qu'**au moins un éventuel autre moyen de détection (3, 14, 15) travaille en dehors de la plage d'ondes de la lumière visible.

7. Véhicule automobile selon la revendication 6, **caractérisé en ce qu'**un ou plusieurs capteurs infrarouges qui travaillent dans le domaine de l'infrarouge proche ou éloigné ou un ou plusieurs capteurs radar, ou un ou plusieurs dispositifs PMD sont prévus comme moyen de détection (3, 14, 15) travaillant en dehors de la plage d'ondes de la lumière visible.

8. Véhicule automobile selon l'une quelconque des revendications 4 à 7, **caractérisé en ce qu'**un éventuel autre moyen de détection (3, 14, 15) est un ou plusieurs scanners laser.

9. Véhicule automobile selon l'une quelconque des revendications 1 à 8, **caractérisé en ce que**, pour déterminer les données de position d'un objet par rapport au véhicule, deux moyens de détection (3, 14, 15) qui fournissent des données d'image, sont disposés en décalé l'un par rapport à l'autre pour réaliser un effet stéréo et **en ce que** le ou les moyens d'analyse sont réalisés pour déterminer les données de position à partir des deux données d'image.

10. Véhicule automobile selon l'une quelconque des revendications 1 à 9, **caractérisé en ce qu'**au moins l'un des moyens de détection (3, 14, 15) prévus côté véhicule automobile fournit des informations, au moyen desquelles des données indiquant la position d'un objet par rapport au véhicule peuvent être déterminées.

11. Véhicule automobile selon l'une quelconque des revendications 4 à 10, **caractérisé en ce qu'**un moyen de détection (3) travaillant dans la plage d'ondes visibles et deux moyens de détection (14, 15) travaillant en dehors de cette plage, parmi lesquels l'un (14) fournit des informations autorisant la détermination de données de position de l'objet par rapport au véhicule, sont prévus, et **en ce qu'**en fonction de la luminosité ambiante, il est possible de commuter d'un fonctionnement commun du moyen de détection (3) travaillant dans la plage visible et du moyen de détection (14) fournissant les données de position, à un fonctionnement commun de l'autre moyen de détection (15) travaillant dans la plage non visible conjointement avec le moyen de détection (14) fournissant les données de position.
